# EUROPEAN PATENT APPLICATION

(11) **EP 1 793 596 A2**
(43) Date of publication of application: **06.06.2007**
(21) Application number: 06123292.2
(22) Date of filing: 31.10.2006
(51) Int. Cl.: H04N 5/45, H04N 5/445

(54) **Video processing apparatus and control method**

(30) Priority: 30.11.2005 KR 20050115804
(71) Applicant: Samsung Electronics Co., Ltd., Suwon-si 442-742 Gyeonggi-Do (KR)
(72) Inventor: Hwang, Soon-hoon, Jugong Yeongtong Village, Gyeonggi-do (KR); Kang, Yeon-sun, Jugong Yeongtong Village, Gyeonggi-do (KR)
(74) Representative: Walaski, Jan Filip

(57) **Abstract**

A video processing apparatus for processing a plurality of video signals, includes: a display; an information storage which stores combination information relating to a combination of two or more video signals, among the plurality of video signals, that can be displayed concurrently on the display; and a controller which controls to display the visual representation of the combination information stored in the information storage on the display.

## Description

The present invention relates to an apparatus for processing a plurality of video signals and a control method therefor, and more particularly, to a video processing apparatus for displaying a picture-in-picture (PIP) screen, and a control method of the video processing apparatus.

A video processing apparatus such as television, receives a video signal from a broadcasting station or from an external video source such as video cassette recorder (VCR), digital versatile disk (DVD) player, personal computer (PC) and the like, conducts video processing for the received video signal, and displays a video based on the processed video signal. The video processing apparatus performs the video processing such as an analog-to-digital (AD) conversion and/or the decoding, according to the video signal that is input from the broadcasting station or the VCR, and scales the video at a suitable resolution for display on a screen.

The video processing apparatus can concurrently display several videos corresponding to two or more video signals from among a plurality of input video signals. For example, the video processing apparatus has, what is called, a picture-in-picture (PIP) function. To execute the PIP function, a conventional video processing apparatus allows the user to select two video signals to be displayed on a main screen or window and a sub-screen or a PIP screen which is a part of the main screen, performs signal processing with respect to the two video signals selected by the user, and displays the videos of the two video signals at the same time.

The conventional video processing apparatus is able to display two video signals at the same time, not for all possible combinations of the incoming video signals, but only for a part of the possible combinations. By way of an example, among input video signals such as TV, VIDEO, S-VIDEO, Component, PC-Analog, PC-digital, HDMI, and so on, when the PC-Analog is displayed on the main screen, TV, VIDEO, and S-VIDEO can be displayed on the PIP screen concurrently. However, there is a problem that PC-digital and HDMI may not be displayed on the PIP screen.

However, the conventional video processing apparatus does not inform the user of information as to the combination of the two video signals that are displayable concurrently (hereafter, referred to as combination information). Thus, the user does not know which video signals are displayable together with the video signal selected for the main screen. As a result, the user has to select various video signals one by one with a heuristic approach and acquires the video signal displayable on the PIP screen.

Moreover, the conventional video processing apparatus does not inform the information as to video signals that can be selected at present time. Even though the user knows the combination of video signals which can be displayed on the main screen and the PIP screen, the user does not know which one(s) of the video signals are connected to the video processing apparatus.

Accordingly, according to an aspect of the present invention, there is provided a video processing apparatus for improving the convenience of the user by displaying the visual indication of the video sources that are simultaneously displayable on the screen, and the control method of the video processing apparatus.

The foregoing and/or other aspects of the present invention can be achieved by providing a video processing apparatus for processing a plurality of video signals, comprising: a display; an information storage which stores combination information relating to a combination of two or more video signals, among the plurality of video signals, that can be displayed concurrently on the display; and a controller which controls to display the visual representation of the combination information stored in the information storage on the display.

According to an embodiment of the present invention, the combination information comprises information relating to a combination of a main video signal source and a sub-video signal source, the video processing apparatus further comprises a user input part which selects one, of the plurality of video signals as the main video signal source, and the controller causes to display the visual representation of the combination information of the sub-video signal source in combination with the selected video signal.

According to an embodiment of the present invention, the video processing apparatus further comprises: a signal input part which receives the plurality of video signals, wherein the controller causes to highlight and display the visual representation of the sub-video signal source displayable together with the main video signal source by checking whether a cable for the sub-video signal source is connected to the signal input part.

According to an embodiment of the present invention, the controller comprises an on-screen display (OSD) processor which processes OSD data corresponding to the combination information.

According to an embodiment of the present invention, the OSD processor processes OSD data indicating the combination of two or more video signals.

According to an embodiment of the present invention, the video processing apparatus further comprises: a signal input part which receives the plurality of video signals, wherein the controller causes to highlight and display the visual representation of a sub-video signal source displayable together with the main video signal source by checking whether the video signal from the sub-video signal source is actually received by the signal input part.

According to an embodiment of the present invention, the displaying of the combination information is based upon the type of current video signal being displayed on the main screen.

According to an embodiment of the present invention, the video signal of the main video signal and the PIP video signal is displayed with the visual representation of the combination information.

According to an embodiment of the present invention, the visual representation of the combination information is semi-transparent.

According to an embodiment of the present invention, the visual representation of the combination information is opaque.

According to an embodiment of the present invention, visual representation of the combination information comprises of a visual indication of different types of video sources displayable on the main screen and a visual indication of different types of video sources displayable on a PIP screen.

According to an embodiment of the present invention, a visual indication for indicating the video sources that are simultaneously displayable is displayed.

According to an embodiment of the present invention, the visual indication of different types of video sources are not displayed when the video processing apparatus is not actually receiving the video signal from the video source.

According to an embodiment of the present invention, the visual indication of different types of video sources are not displayed when the cable for receiving the video source is not connected to the video processing apparatus.

According to an embodiment of the present invention, the visual indication for indicating only the video sources that are simultaneously displayable with a user designated video source is displayed.

The foregoing and/or other aspects of the present invention can be achieved by providing a control method of a video processing apparatus which comprises a display, a memory storing combination information relating to a combination of two or more video signals, among a plurality of video signals, that can be displayed concurrently on the display, the method comprising: selecting one of the plurality of video signals by a user; and displaying the visual indication of the combination information in combination with the selected video signal on the display.

According to an embodiment of the present invention, the combination information comprises information relating to a combination of a main video signal source and a sub-video signal source, the selecting operation selects one of the plurality of video signals as the main video signal source, and the displaying operation displays the visual indication of combination information of the sub-video signal source in combination with the selected video signal on the display.

According to an embodiment of the present invention, the control method further comprises: checking whether the video signal is input, wherein the displaying operation highlights and displays the sub-video signal source displayable together with the main video signal source.

According to an embodiment of the present invention, the displaying operation comprises: processing on-screen display (OSD) data corresponding to the combination information.

According to an embodiment of the present invention, the OSD processing operation processes OSD data indicating the combination of two or more video signals.

Embodiments of the present invention will now be described by way of example only, with reference to the accompanying drawings, in which:
Figure 1 is a simplified block diagram illustrating a video processing apparatus according to one embodiment of the present invention;
Figure 2 is a diagram illustrating combination information displayed by the video processing apparatus according to one embodiment of the present invention;
Figure 3 is a diagram illustrating combination information displayed by the video processing apparatus according to another embodiment of the present invention;
Figures 4 and 5 are diagrams illustrating combination information displayed by the video processing apparatus according to still another embodiment of the present invention; and
Figure 6 is a flowchart illustrating a control method of the video processing apparatus according to an embodiment of the present invention.

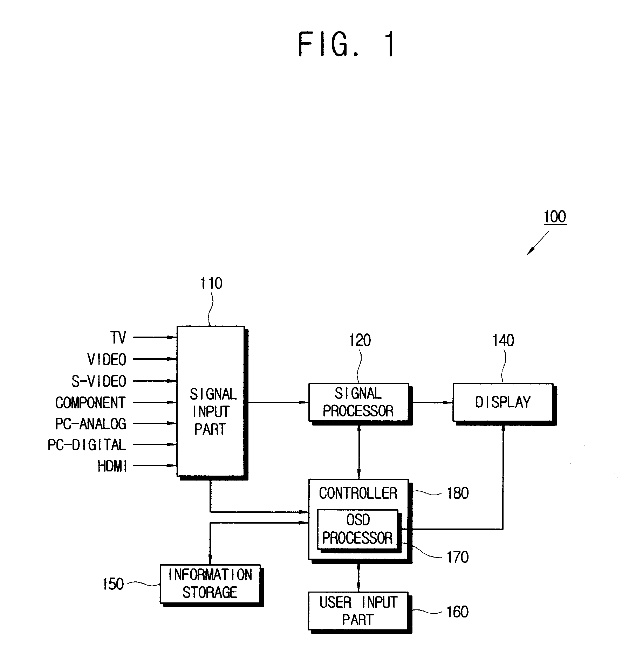

Figure 1 is a simplified block diagram of a video processing apparatus 100 according to one embodiment of the present invention. The video processing apparatus 100 receives a video signal of a television from a broadcasting station or a video signal from an external video source such as VCR, DVD, PC and the like, performs a proper video processing with respect to the received video signal, and displays a video based on the processed video signal. By way of an example, the video processing apparatus 100 may be a TV but not limited thereto.

Referring to Figure 1, the video processing apparatus 100 comprises a signal input part 110, a signal processor 120, a display 140, an information storage means 150, a user input means 160, and a controller 180.

The signal input part 110 receives a plurality of video signals. The signal input part 110 may be provided with a tuner (not shown) to receive the video signal of the television from the broadcasting station. The signal input part 110 may receive video signals from external video sources (not shown) such as VCR, DVD, PC and so forth. In this case, connection terminals (not shown) may be provided for the connection with the external video sources. The video signals input to the signal input part 110 include "TV", "VIDEO", "S-VIDEO", "Component", "PC-Analog", "PC-digital", and "HDMI" video signals. Hereafter, it is regarded that "TV", "VIDEO", "S-VIDEO", "Component", "PC-Analog", "PC-digital", and "HDMI" indicate the respective video signals. The signal input part 110 may provide sensing signals indicative of whether the external video sources are connected to the connection terminals, to the controller 180. The controller 180 receives the sensing signals from the signal input part 110 and determines which of the cables of the plurality of video signals are connected. The pin connection type or any other method of detecting whether the cables are connected may be utilized.

The signal processor 120 carries out the signal processing in accordance with the type of the video signal that is input via the signal input part 110. For example, the signal processor 120 performs the decoding with respect to "VIDEO", and the AD conversion with respect to the "PC-Analog". The signal processor 120 processes the video signal so as to display the processed video signal on the display 140 at a predetermined resolution.

The display 140 may be implemented using a liquid crystal display (LCD), a plasma display panel (PDP), and the like.

The information storage means 150 retains the combination information relating to the combination of a pair of video signals displayable concurrently on the display 140, among the plurality of video signals incoming via the signal input part 110. The combination information contains information relating to which a pair of video signals of the pairs are displayable on a main screen and a PIP screen, respectively. In one embodiment of the present invention, the two video signals displayable on the main screen and the PIP screen are examples of the video signals of a main video signal source and a sub-video signal source, respectively.

The user input part 160 receives a user's command and provides information corresponding to the input command to the controller 180. The user input part 160 may provide with a button for directing to display the combination information relating to the main screen and the PIP screen. The user input part 160 may be implemented using a remote controller, a manipulation panel, and the like.

The controller 180 is responsible to control overall operations of the components of the video processing apparatus 110. The controller 180 controls the other components of the video processing apparatus 100 according to the user's command received through the user input part 160. When the user's command is input, the controller 180 reads out the combination information corresponding to the video signal selected for the main screen by the user, from the information storage means 150, and displays an image based on the combination information on the display 140. When a button on the user input part 160 is pressed, the controller 180 determines that the user instructs to display the combination information relating to the main screen and the PIP screen.

The controller 180 includes an on-screen display (OSD) processor 170 which processes OSD data relating to the image to be displayed on the display 140 based on the combination information of the video signals. The OSD processor 170 can generate image in the form of an OSD. The OSD processor 170 generates the image corresponding to the specific combination information under the control of the controller 180.

In case of two or more video signals displayable on the PIP screen, the OSD processor 170 generates a highlighted image to recognize the connectable video signal based on the sensing signals received from the signal input part 110.

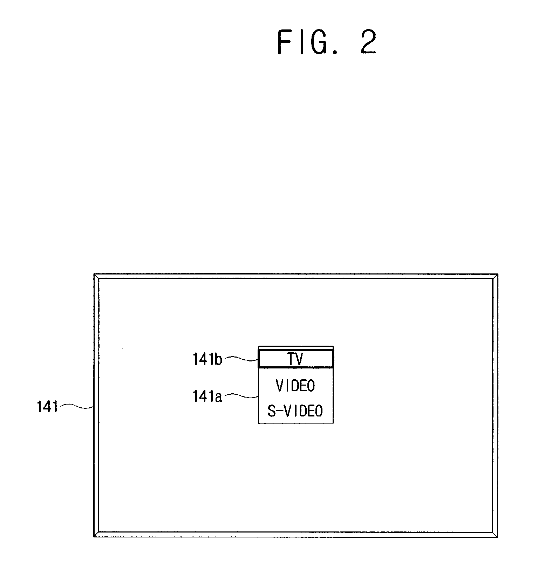

Figure 2 is a diagram illustrating combination information displayed by the video processing apparatus 100 according to one embodiment of the present invention. The controller 180 causes an image 141a to be displayed showing video signals displayable on the PIP screen at the same time, together with the image displayed on a screen 141 of the display 140.

The controller 180 determines that three video signals "TV", "VIDEO", and "S-VIDEO" are displayable on the PIP screen based upon the video signal currently being displayed on the main screen, and further determines that only "TV" among them is the currently connected video signal by analyzing the sensing signals provided from the signal input part 110, and controls the OSD processor 170 and the signal processor 120 to display the image 141b with "TV" highlighted.

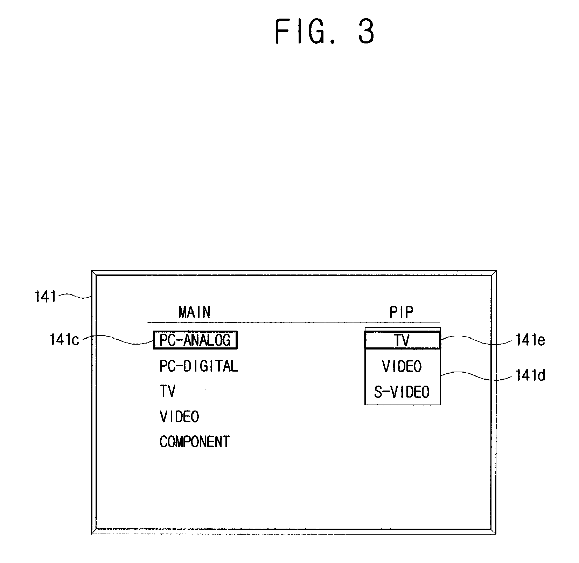

Figure 3 is a diagram illustrating combination information displayed by the video processing apparatus 100 according to another embodiment of the present invention. In this embodiment of the present invention, in response to the user's command, the controller 180 causes an image 141c to be displayed, showing the video signal being displayed on the main screen, and an image 141d showing video signals displayable on the PIP screen together with the main screen based upon the type of video signal being displayed on the main screen. In this example, three video signals "TV", "VIDEO" and "S-VIDEO" are displayable on the PIP screen when the "PC-ANALOG" is displayed on the main screen. The controller 180 determines that "TV" video signal is currently connected to the video processing apparatus 100 and thus, "TV" is highlighted as shown in 141e.

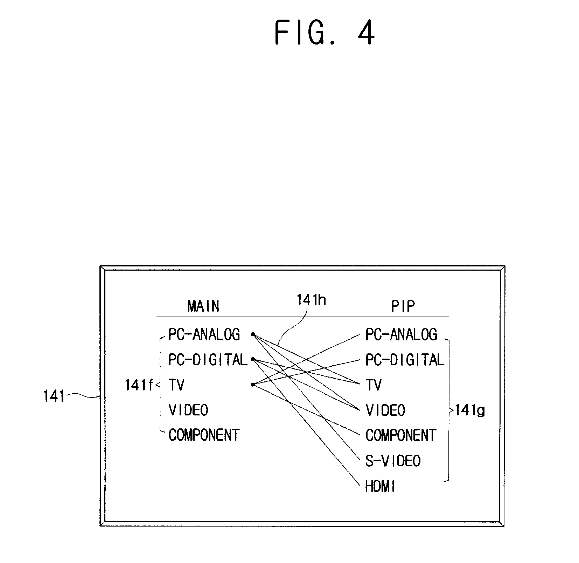

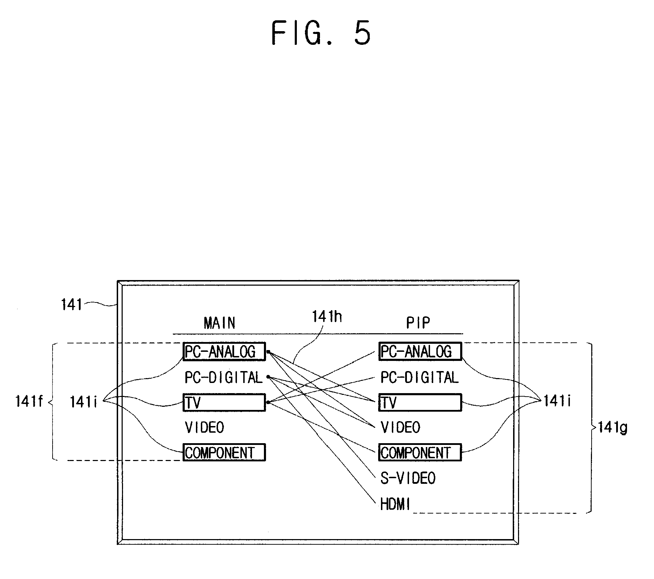

Figures 4 and 5 are diagrams illustrating combination information displayed by the video processing apparatus 100 according to still another embodiment of the present invention. In response to the user's command, the controller 180 causes an image 141f to be displayed showing video signals displayable on the main screen, an image 141g showing video signals displayable on the PIP screen together with the main screen, and a connection image 141h showing the combination of both video signals that can be displayed at the same time, to the screen 141.

Based on the sensing signals provided from the signal input part 110, the controller 180 can display an image 141i highlighting the currently connected video signals among the plurality of video signals.

In another embodiment of the present invention, the controller 180 may be implemented using a computer program which is executed by a microprocessor such as central processing unit (CPU), microcontroller unit (MCU), and the like.

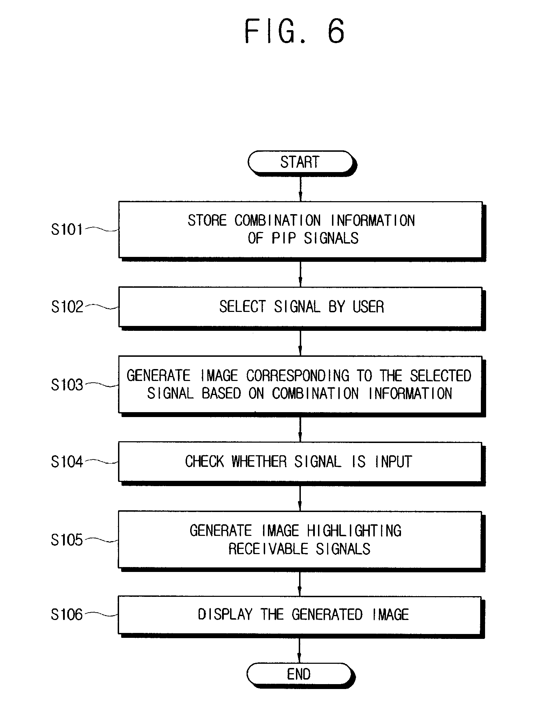

Figure 6 is a flowchart illustrating a control method of the video processing apparatus 100 according to an embodiment of the present invention. First, the combination information relating to the combination of the pair of video signals that are displayable concurrently, among the plurality of incoming video signals, is stored (S101).

Next, the user selects a video signal to be displayed on the main screen (S102). Based on the stored combination information, the image showing the video signals displayable on the PIP screen in combination with the selected video signal, is generated (S103).

When there are several video signals that are displayable on the PIP screen in combination with the selected video signal, which of the several video signals are presently connected to the video processing apparatus 100 is checked (S104). Next, the image highlighting the video signals that are presently connected is generated (S105). Finally, the generated image is displayed on the screen (S106).

In an alternative embodiment, it is possible to display the image showing the video signals displayable on the main screen, the image showing the video signals displayable on the PIP screen together with the main screen and/or the PIP screen, and the connection image showing the combinations of the two video signals that can be displayed at the same time. That is, such images may be semi-transparent or opaque showing the main screen and/or the PIP screen in the background.

In Figures 4 and 5, the connection image 141h may be implemented in various different forms and shapes. Furthermore, in the Figure 5, the connection image 141h may only point to the currently connected video signals for the sake of simplicity; i.e. the connection image 141h may have the visual reference (the line between main and the PIP column) to the "PC-DIGITAL", "VIDEO", "S-VIDEO" and "HDMI" video signals deleted. Still furthermore, the connection image 141h may only point to the video signal(s) of the PIP column which can be simultaneously displayed with a certain user designated video signal in the main video signal column.

In Figures 2, 3 and 5, even though the highlighting of a video signal in the main screen column and/or the PIP screen column indicates that the cable of the corresponding video signal is connected to the video processing apparatus 100, the highlight may alternately indicate whether the corresponding video signal is actually being received (the signal may be non-existent or unusable), irrespective of whether the cable is connected. Furthermore, the image representing the video signals in the main screen column and/or the PIP screen column that are not actually receiving the video signal may be deleted for the sake of simplicity.

It is noted that various ways of displaying the connection status and/or the indication of actual receiving of a video signal may be combines with the various ways of displaying the information regarding the simultaneous display of the main video signal and the PIP video signal.

As set forth above, the video processing apparatus and the control method thereof can improve the convenience of the user by easily displaying the PIP screen.

Although a few embodiments of the present invention have been shown and described, it will be appreciated by those skilled in the art that changes may be made in these embodiments without departing from the invention, the scope of which is defined in the appended claims.

## Claims

1. An apparatus for processing a plurality of video signals, comprising:
a display for displaying one or more of the video signals;
means for storing combination information relating to video signals which can be displayed concurrently; and
a controller for controlling the apparatus to display the combination information.

2. An apparatus according to claim 1, further comprising a user input means for selecting a video signal, in which the controller is arranged to control the apparatus to display combination information relating to video signals which can be displayed with the selected video signal.

3. An apparatus according to claim 2, further comprising means for receiving the plurality of video signals, wherein the apparatus is further arranged to determine sources of video signals displayable together with the selected video signal by checking whether a cable for the signal source is connected to the receiving means.

4. An apparatus according to claim 3, in which the apparatus is further arranged to check whether a signal is received at the receiving means from the source to determine the sources having video signals displayable together with the main video signal.

5. An apparatus according to any preceding claim, wherein the controller comprises an on-screen display (OSD) processor arranged to process OSD data corresponding to the combination information.

6. An apparatus according to any preceding claim, arranged to display a video signal and the combination information concurrently.

7. An apparatus according to claim 6, in which the combination information is semi-transparent.

8. An apparatus according to claim 6, in which the combination information is opaque.

9. An apparatus according to any preceding claim, arranged to display a first video signal in a main window and to display a second video signal in a subsidiary window, the apparatus being further arranged to display a visual indication of different sources of video signals displayable in the main window and a visual indication of different sources of video signals displayable in the subsidiary window.

10. A method of controlling an apparatus for processing a plurality of video signals, comprising:
selecting one of the plurality of video signals for display by the apparatus; and
displaying combination information relating to video signals which are displayable with the selected video signal.

11. A method according to claim 10, further comprising checking whether a video signal is received from a source, wherein the displaying operation displays the source of a video signal displayable together with the selected video signal if a signal is received from that source.

12. A method according to claim 10 or 11, wherein the displaying operation comprises processing on-screen display (OSD) data corresponding to the combination information.

13. A computer program which, when executed by a processor, is arranged to perform the method of any one of claims 10 to 12.
